# EUROPEAN PATENT SPECIFICATION

(11) **EP 0 756 082 B1**
(45) Date of publication and mention of the grant of the patent: **15.01.2003**
(21) Application number: 96305246.9
(22) Date of filing: 17.07.1996
(51) Int. Cl.: F02P 5/04, F02P 5/15

(54) **Improved time delay ignition circuit for an internal combustion engine**
Verbesserter Zeitverzögerungszündkreis für eine Brennkraftmaschine
Circuit d'allumage à retard de temps perfectionné pour un moteur à combustion interne

(30) Priority: 25.07.1995 US 507664; 21.06.1996 US 20032 P
(43) Date of publication of application: 29.01.1997
(60) Divisional application: 99126240.3
(73) Proprietor: Ficht GmbH & Co. KG, 85614 Kirchseeon (DE)
(72) Inventor: Binversie, Gregory J., Grayslake, Illinois 60030 (US); Todd, D. Craft, Kenosha, Wisconsin 53142 (US); Bylsma, Philip J., Brookfield, Wisconsin53005 (US); Hellmich, Wolfram, 81829 München (DE)
(74) Representative: Harding, Richard Patrick

(56) References cited:
- DE-A- 2 719 809
- DE-A- 4 020 298
- FR-A- 1 271 399
- GB-A- 2 122 684
- US-A- 3 892 207
- US-A- 4 380 989
- US-A- 4 621 599

## Description

The invention relates to an internal combustion engine assembly.

Spark-ignited internal combustion engines require a spark at the spark plug in order to ignite the fuel and air mixture in the cylinder of the engine. The timing of the combustion event is critical in the operation of the internal combustion engine. Particularly, the timing of the combustion event controls the speed and acceleration of the engine as well as the efficiency with which the fuel in the cylinder is burned. Various methods of timing the combustion event are known. In particular, it is generally known to make use of various engine operating parameters to time the combustion event. Such parameters may include crankshaft angle, engine temperature and/or cylinder pressure.

In the case of an internal combustion engine utilizing fuel injectors, the air/fuel mixture is atomized into a "stratified" fuel/air cloud that "floats" from the injector nozzle in the cylinder toward the spark gap at the spark plug. If the ignition spark jumps the spark gap before the fuel/air cloud reaches the spark gap, the fuel/air cloud will not be completely burned. In order to assure that complete combustion of the stratified fuel/air cloud is attained, it is necessary to time the ignition spark for the precise moment when the fuel/air cloud reaches the spark gap.

It is an advantage of the invention to provide an ignition system that bases the timing of the ignition spark on an absolute period of time measured from the fuel injection event.

It is another advantage of the invention to provide an ignition timing system that causes efficient and complete combustion of the fuel/air cloud in the cylinder.

It is another advantage of the invention to provide an ignition timing system that is resistant to minor engine speed fluctuations.

From US 4621599, a spark ignition type internal combustion engine assembly is known which includes an internal combustion engine having an engine block in which at least one cylinder is disposed, a piston mounted within the cylinder for reciprocal movement therein, and a fuel injector for injecting fuel into the cylinder. The assembly also includes an electric control circuit which generates both an injection control signal indicative of a fuel injection event and a spark in the cylinder a predetermined amount of time after generation of the injection control signal. The circuit includes a timer, having a timer output for generating an electrical timing signal, and a microprocessor having an injector output for generating the injection control signal. The timing signal has a predetermined duration indicating an amount of time elapsed from generation of the injection control signal, and the injector output is connected to the timer to initiate the timing signal.

According to the present invention, there is provided an internal combustion engine assembly comprising an internal combustion engine including an engine block having at least one cylinder; a piston mounted within said cylinder for reciprocal movement in said cylinder; a fuel injector for injecting fuel into said cylinder; and a circuit for generating an injection control signal indicative of a fuel injection event and for generating a spark in said cylinder a predetermined amount of time after generation of said injection control signal, said circuit including a timer having a timer output for generating an electrical timing signal, a microprocessor having an injector output for generating said injection control signal, and means for generating a spark signal, said timing signal having a predetermined duration indicating an amount of time elapsed from generation of said injection control signal, and said injector output being connected to said timer to initiate said timing signal, characterised in that said circuit further includes an AND gate receiving said timing signal and said spark signal and in that the AND gate generates an ignition current in response to receipt of both said timing signal and said spark signal.

Preferably, said spark is generated when said AND gate stops generating said ignition current.

The invention will now be described, by way of example only, with reference to the accompanying drawings, wherein :
Fig. 1 is a partial cross section of an internal combustion engine embodying the invention,
Fig. 2 is an electrical schematic of the time delay ignition circuit for an internal combustion engine having a single cylinder,
Fig. 3 is a time chart illustrating the time-based relationships between various electronic signals in the time delay ignition circuit.
Fig. 4 is an electrical schematic illustrating a time delay ignition circuit for use in connection with an internal combustion engine having six cylinders.
Fig. 5 is a chart illustrating injection timing for the engine of Fig. 4 as measured in degrees before top-dead-center ("DBTDC") and plotted as a function of engine speed and throttle position.
Fig. 6 is a chart illustrating ignition timing for the engine of Fig. 4 as measured in DBTDC and plotted as a function of engine speed and throttle position.
Fig. 7 is a chart illustrating the maximum ignition coil on time for the engine of Fig. 4 as measured in milliseconds (ms) and plotted as a function of engine speed.
Fig. 8 is a chart illustrating the ignition coil on time for the engine of Fig. 4 as measured in milliseconds (ms) and plotted as a function of engine speed and throttle position.
Fig. 9 is a chart illustrating the injection pulse 2time for the engine of Fig. 4 as measured in milliseconds (ms) and plotted as a function of engine speed and throttle position.
Fig. 10 is a graph showing the transition from time-based ignition to crank-angle-based ignition in the engine of Fig. 4.

Before one embodiment of the invention is explained in detail, it is to be understood that the invention is not limited in its application to the details of construction and the arrangement of components set forth in the following description or illustrated in the drawings. The invention is capable of other embodiments and of being practiced or carried out in various ways within the scope of the claims. Also, it is to be understood that the phraseology and terminology used herein is for the purpose of description and should not be regarded as limiting.

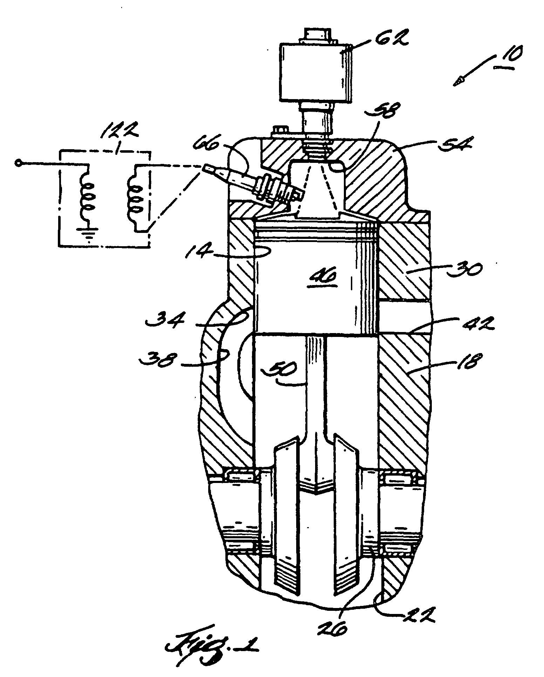

Partially shown in Fig. 1 of the drawings is an internal combustion engine 10. One cylinder 14 of the engine 10 is illustrated in Fig. 1. The engine 10 includes a crankcase 18 defining a crankcase chamber 22 and having a crankshaft 26 rotatable therein. An engine block 30 defines the cylinder 14. The engine block 30 also defines an intake port 34 communicating between the cylinder 14 and the crankcase chamber 22 via a transfer passage 38. The engine block 30 also defines an exhaust port 42. A piston 46 is reciprocally moveable in the cylinder 14 and is drivingly connected to the crankshaft 26 by a connecting rod and crank pin assembly 50. A cylinder head 54 closes the upper end of the cylinder 14 so as to define a combustion chamber 58. The engine 10 also includes a fuel injector 62 mounted on the cylinder head 54 for injecting fuel into the combustion chamber 58. A spark plug 66 is mounted on the cylinder head 54 and extends into the combustion chamber 58.

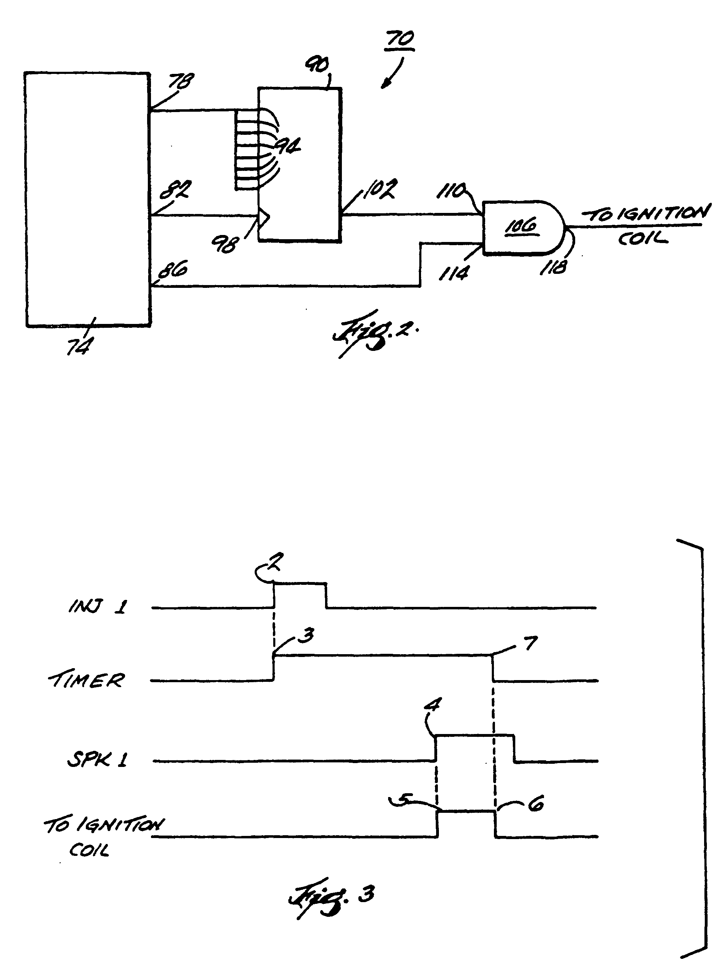

The internal combustion engine 10 also includes (see Fig. 2) a time delay ignition circuit 70 for generating a spark in the cylinder 14 at a pre-determined moment after the injection of fuel into the combustion chamber 58 has occurred. As shown in Fig. 2, the time delay ignition circuit 70 includes a microprocessor 74 having data outputs 78, an injection indicator output 82 and a spark generating output 86. As described below, the microprocessor 74 generates spark signals at the output 86. It should be understood however, that the spark signals may be generated by another appropriate component such as an ECU. The circuit 70 also includes a timer 90 having an 8-bit register of data inputs 94 for receiving timing information from the data outputs 78 of the microprocessor 74. The timer 90 also has a trigger input 98 connected to the injection indicator output 82 of the microprocessor 74 to receive from the microprocessor 74 a signal indicating when an injection event has been initiated by the microprocessor 74. The timer 90 also includes a timing pulse output 102.

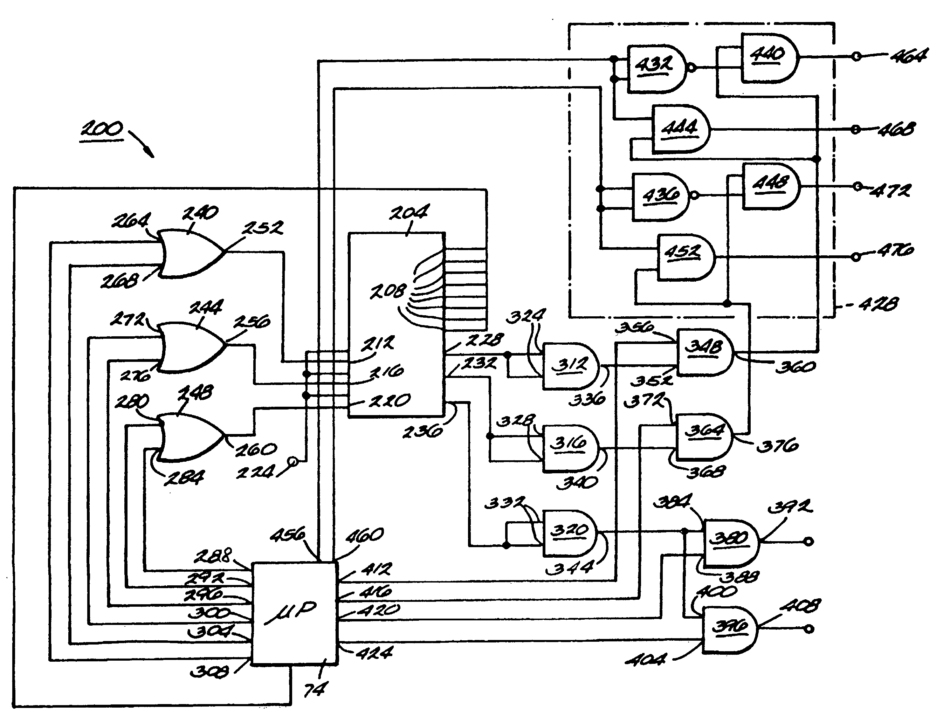

The time delay ignition circuit 70 also includes an AND gate 106 having two inputs 110 and 114 and an output 118. Input 110 of AND gate 106 is connected to the output 102 of the timer 90. Input 114 of AND gate 106 is connected to the microprocessor 74 to receive from the microprocessor 74 a spark generating signal from spark generating output 86. The output 118 of the AND gate 106 is connected to an ignition coil 122 (shown schematically in Fig. 1) to generate a spark in the cylinder 14 and ignite the fuel in the cylinder 14. In operation, when an injection event occurs, the timer 90 receives, from output 82 of microprocessor 74, an injection control signal (see reference numeral 2 in Fig. 3) at the trigger input 98 of timer 90 and, in response to the injection control signal, begins to count the clock pulses from the microprocessor clock signal. As long as the timer count has not expired, the timer 90 generates at the output 102 a high signal or timing signal (see reference numeral 3 in Fig. 3). When the microprocessor 74 generates the spark signal at the output 86 (see reference numeral 4 in Fig. 3), and this spark signal is received at the input 114 to the AND gate 106, the AND gate 106 generates at output 118 an output or ignition signal or current which is transmitted to the ignition coil 122 (see reference numeral 5 in Fig. 3). The output 118 goes low (see reference numeral 6 in Fig 3) when the output 102 goes low (see reference numeral 7 in Fig. 3). While the output 118 is high, current flowing through the ignition coil rises. The output 102 goes low when the timer count received from the microprocessor has expired, causing the output 118 to go low, i.e., when the microprocessor 74 indicates that the desired amount of time has elapsed since the injection event. Because the current in an inductor or ignition coil cannot change instantaneously (V = L(di/dt)), the abrupt change in the current supply to the ignition coil causes the voltage on the ignition coil to quickly rise thereby generating a spark causing ignition of the fuel in the cylinder 14. In order to accommodate various sized engines having various numbers of cylinders, the time delay ignition circuit 70 of Fig. 2 can be repeated as many times as there are cylinders.

The ignition circuit 70 may be used at any speeds. The ignition circuit 70 is preferably used at low or idle speeds, i.e., speeds of 200 to 2000 crankshaft rotations per minute ("rpm"), and has been shown to operate particularly well at speeds as low as 200 rpm. In the prior art, the spark generating signal is connected directly to the ignition coil and initiates the ignition spark directly and without the need for any additional signals. The result is that the timing of prior art ignition events is dependent upon crank angle rather than upon absolute time calculated from a fixed point in time. In contrast, the ignition circuit 70 causes ignition to always occur a predetermined amount of time after the injection event occurs, and this predetermined amount of time is not based on the crank angle of the crankshaft. The fuel injection event is the generation of the fuel injection signal at output 86 of microprocessor 74. This may occur either at energization of the fuel injector or upon actual injection of the fuel into the cylinder 14.

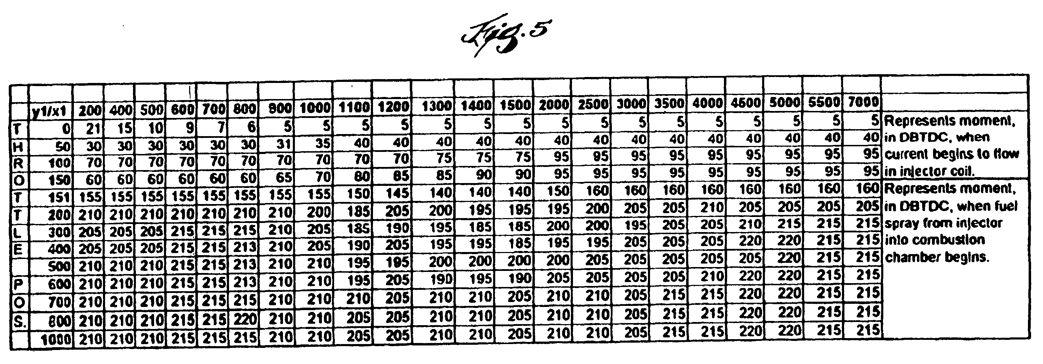

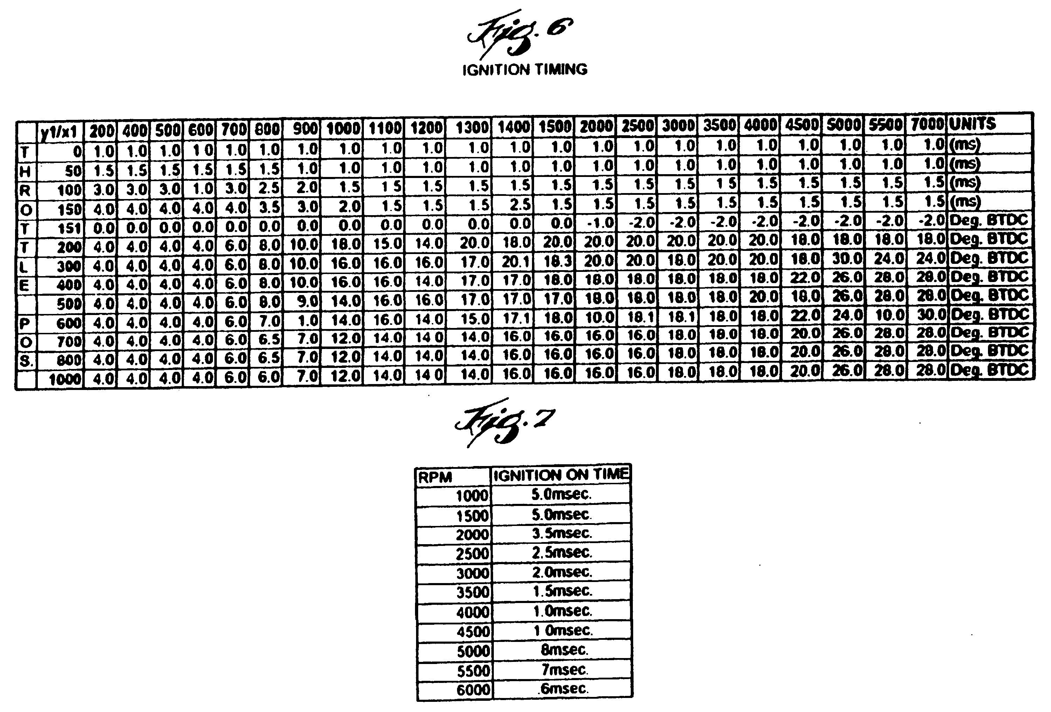

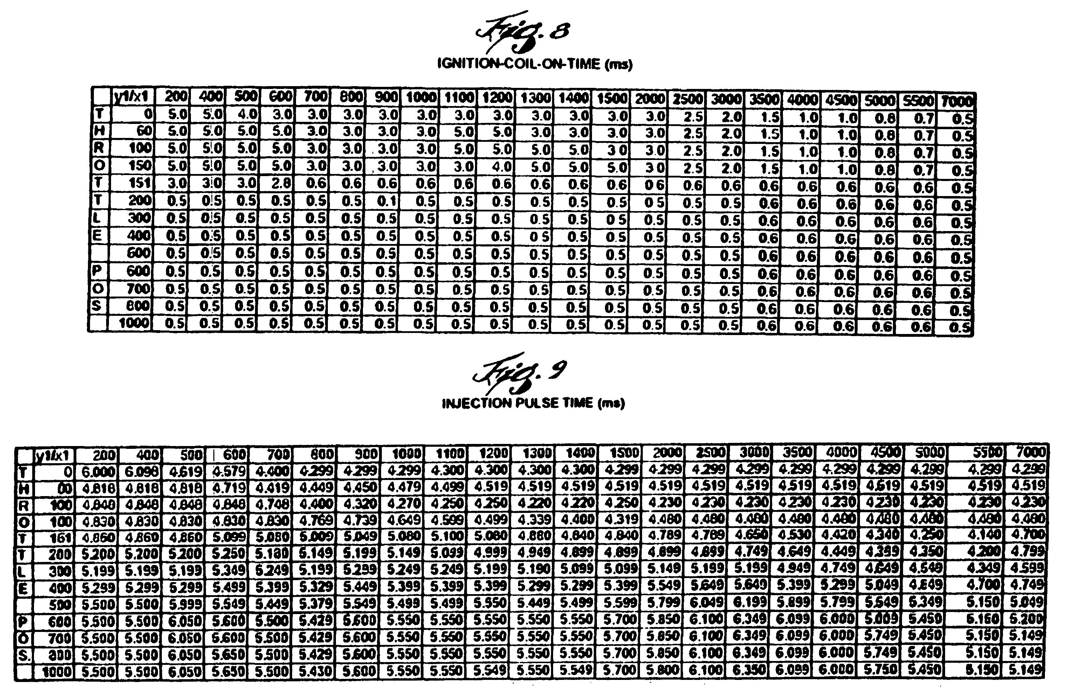

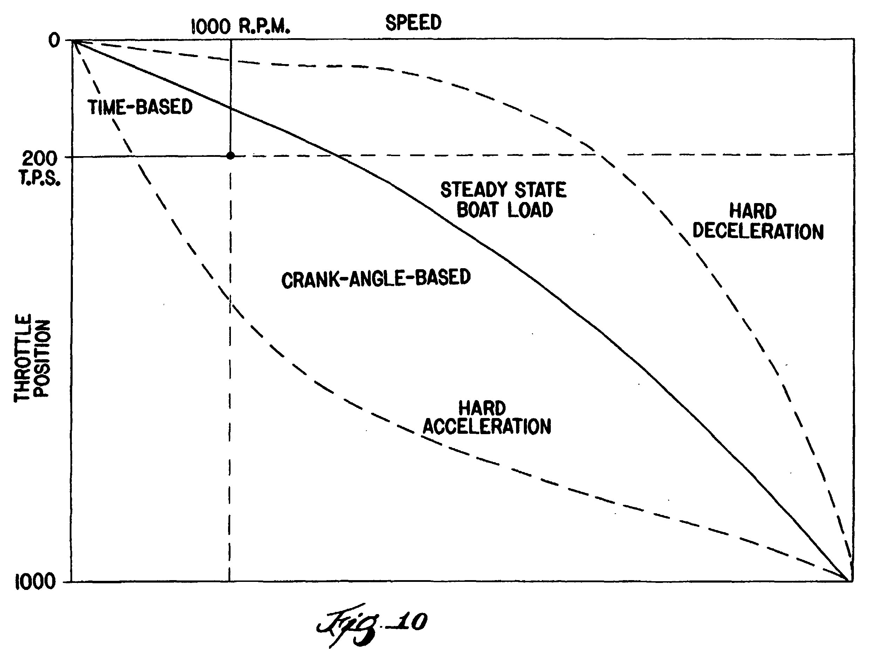

Fig. 4 illustrates a time delay ignition circuit 200 for a six cylinder engine. Like parts are identified using like reference numerals. Rather than repeating the circuit 70 of Fig. 2 six times, the embodiment illustrated in Fig. 4 combines (multiplexes) various signals to achieve some economy in the use of electronic components.

As shown in Fig. 4, the circuit 200 includes a timer 204 having an eight bit data input register 208, three trigger inputs 212, 216 and 220 corresponding to cylinders one and four, two and five, and three and six, respectively, a clock input 224 and three outputs 228, 232 and 236 corresponding to trigger inputs 212, 216 and 220, respectively. The circuit 200 also includes OR gates 240, 244 and 248 having outputs 252, 256 and 260, respectively, which are connected to trigger inputs 212, 216 and 220, respectively. OR gates 240, 244 and 248 also include inputs 264 and 268, 272 and 276, and 280 and 284, respectively, connected to the microprocessor 74 to receive injection output signals indicating that an injection event has occurred in a given cylinder. That is, the microprocessor generates output signals at outputs 288, 292, 296, 300, 304 and 308 to indicate that injection has occurred in cylinders one, four, two, five, three, and six, respectively.

- The time delay ignition circuit 200 also includes AND gates 312, 316 and 320 having respective pairs of inputs 324, 328 and 332 connected to timer outputs 228, 232, and 236, respectively, and having respective outputs 336, 340 and 344. The time delay ignition circuit 200 also includes AND gate 348 having an input 352 connected to the output 336 of AND gate 312, an input 356 and an output 360; AND gate 364 having an input 368 connected to the output 340 of AND gate 316, an input 372 and an output 376; AND gate 380 having an input 384 connected to the output 344 of AND gate 320, an input 388 and an output 392; and AND gate 396 having an input 400 connected to the output 344 of AND gate 320, an input 404 and an output 408. Inputs 356 and 372 of AND gates 348 and 364, respectively, are connected to the microprocessor 74 to receive the spark signals from outputs 412 and 416, respectively, of microprocessor 74. In time delay ignition circuit 200, the spark signals from the microprocessor for cylinders one and four are multiplexed, i.e., combined, on output 412 and the spark signals for cylinders two and five are multiplexed on output 416. Inputs 388 and 404 of AND gates 380 and 396, respectively, are connected to the microprocessor 74 to receive the spark signals from outputs 420 and 424, respectively, of microprocessor 74. Output 420 generates the spark signal for cylinder three while output 424 generates the spark signal for cylinder six. The outputs 392 and 408 of AND gates 380 and 396, respectively, provide the ignition control signals for ignition coils of cylinders three and six, respectively. Alternatively, the ignition control signals for cylinders three and six could be generated by the microprocessor 74 in multiplexed form and combined along with the combined timing output signal at 344 and demultiplexed by a circuit similar to DMUX 428. The outputs 360 and 376 of AND gates 348 and 364, respectively, provide the multiplexed ignition control signals for ignition coils of cylinders one and four and cylinders two and five, respectively.

The time delay ignition control circuit 200 also includes a demultiplexer ("DMUX") 428. The DMUX 428 includes AND gates 432 and 436 and AND gates 440, 444, 448 and 452. DMUX receives as inputs the outputs 360 and 376 of AND gates 348 and 364, respectively, and control outputs 456 and 460 of microprocessor 74 to demultiplex the multiplexed ignition control signals for cylinders one and four and two and five that are generated at outputs 360 and 376, respectively. DMUX generates the demultiplexed ignition control signals at outputs 464, 468, 472 and 476 for cylinders one, four, two and five, respectively.

In operation, the time delay ignition circuit 200 is used at low speeds, i.e., speeds of 200 to 2000 crankshaft rotations per minute ("rpm"), and has been shown to operate particularly well at speeds as low as 200 rpm. The microprocessor supplies an injection signal for cylinder one at input 264 of OR gate 240 and for cylinder four at input 268 of OR gate 240. Thus the injection signals for cylinders one and four are combined at the output 252 of the OR gate 240. Likewise, the injection signals for cylinders two and five are combined at the output 256 of OR gate 244 and the injection signals for cylinders three and six are combined at the output 260 of OR gate 248. The injection signals are input to timer trigger inputs 212, 216 and 220, respectively. Based on multiplexed timing data received from the microprocessor via data inputs 208, a combined timing signal is generated for cylinders one and four at output 228, for cylinders two and five at output 232, and for cylinders three and six at output 236. The combined timing signals are combined with combined spark control signals for cylinders one and four, and cylinders two and five, respectively, to create a pair of combined ignition signals for cylinders one and four, and two and five. DMUX 428 demultiplexes the combined ignition signals to generate an absolute time based ignition signal for cylinders one, four, two and five.

The microprocessor also generates separate spark control signals for cylinders three and six at microprocessor outputs 420 and 424, respectively. The spark control signals are input to AND gates 380 and 396 to generate absolute time based ignition signals for cylinders three and six at outputs 392 and 408, respectively.

## Claims

1. An internal combustion engine assembly comprising:
an internal combustion engine including an engine block (30) having at least one cylinder (14);
a piston (46) mounted within said cylinder (14) for reciprocal movement in said cylinder (14);
a fuel injector (62) for injecting fuel into said cylinder (14); and
a circuit (70;200) for generating an injection control signal indicative of a fuel injection event and for generating a spark in said cylinder (14) a predetermined amount of time after generation of said injection control signal, said circuit (70;200) including a timer (90;204) having a timer output (102;228,232,236) for generating an electrical timing signal, a microprocessor (74) having an injector output (82;288,292,296,300,304,308) for generating said injection control signal, and means (74,86;74,412,416,420,424) for generating a spark signal, said timing signal having a predetermined duration indicating an amount of time elapsed from generation of said injection control signal, and said injector output (82;288,292,296,300,304,308) being connected to said timer (90;204) to initiate said timing signal,
**characterised in that** said circuit (70;200) further includes an AND gate (106;348,364,380,396) receiving said timing signal and said spark signal and **in that** the AND gate (106;348,364,380,396) generates an ignition current in response to receipt of both said timing signal and said spark signal.

2. An internal combustion engine assembly as claimed in claim 1, wherein said spark is generated when said AND gate (106;348,364,380,396) stops generating said ignition current.

## Revendications

1. Une structure de moteur à combustion interne comprenant :
un moteur à combustion interne incluant un bloc-moteur (30) ayant au moins un cylindre (14);
un piston (46) monté à l'intérieur du cylindre (14) pour accomplir un mouvement alternatif dans le cylindre (14);
un injecteur de carburant (62) pour injecter du carburant dans le cylindre (14); et
un circuit (70; 200) pour générer un signal de commande d'injection indiquant un événement d'injection de carburant et pour générer une étincelle dans le cylindre (14) au bout d'un intervalle de temps prédéterminé après la génération du signal de commande d'injection, ce circuit (70; 200) incluant un temporisateur (90; 204) ayant une sortie de temporisateur (102; 228, 232, 236) pour générer un signal de temporisation électrique, un microprocesseur (74) ayant une sortie d'injecteur (82; 288, 292, 296, 300, 304, 308) pour générer le signal de commande d'injection, et des moyens (74, 86; 74, 412, 416, 420, 424) pour générer un signal d'étincelle, le signal de temporisation ayant une durée prédéterminée indiquant un intervalle de temps écoulé depuis la génération du signal de commande d'injection, et la sortie d'injecteur (82; 288, 292, 296, 300, 304, 308) étant connectée au temporisateur (90; 204) pour déclencher le signal de temporisation,
**caractérisé en ce que** ce circuit (70; 200) comprend en outre une porte ET (106; 348, 364, 380, 396) recevant le signal de temporisation et le signal d'étincelle, et **en ce que** la porte ET (106; 348, 364, 380, 396) génère un courant d'allumage en réponse à la réception à la fois du signal de temporisation et du signal d'étincelle.

2. Une structure de moteur à combustion interne selon la revendication 1, dans laquelle l'étincelle est produite lorsque la porte ET (106; 348, 364, 380, 396) cesse de générer le courant d'allumage.

## Patentansprüche

1. Brennkraftmaschinen-Aufbau, umfassend:
eine Brennkraftmaschine mit einem Maschinenblock (30), der wenigstens einen Zylinder (14) aufweist;
einen Kolben (46), der innerhalb des Zylinders (14) für eine Hin- und HerBewegung in dem Zylinder (14) angebracht ist;
einen Kraftstoffeinspritzer (62) zum Einspritzen von Kraftstoff in den Zylinder (14) hinein; und
eine Schaltung (70; 200) zum Erzeugen eines Einspritzsteuersignals, das ein Kraftstoffeinspritzereignis anzeigt und zum Erzeugen eines Funkens in dem Zylinder (14) zu einem vorgegebenen Zeitbetrag nach Erzeugung des Einspritzsteuersignals, wobei die Schaltung (70; 200) einen Timer (90; 204) mit einem Timerausgang (102; 228, 232, 236) zum Erzeugen eines elektrischen Zeitsteuerungssignals, einen Mikroprozessor (74) mit einem Einspritzer-Ausgang (82; 288, 292, 296, 300, 304, 308) zum Erzeugen des Einspritzsteuersignals und eine Einrichtung (74, 86; 74, 412, 416, 420, 424) zum Erzeugen eines Funkensignals einschließt, wobei das Zeitsteuerungssignal eine vorgegebene Dauer aufweist, die einen Zeitbetrag anzeigt, der von einer Erzeugung des Einspritzsteuersignals abläuft, und der Einspritzerausgang (82; 288, 292, 296, 300, 304, 308) mit dem Timer (90; 204) verbunden ist, um das Zeitsteuerungssignal zu initiieren,
**dadurch gekennzeichnet, dass** die Schaltung (70; 200) ferner ein UND-Gatter (106; 348, 364, 380, 396), das das Zeitsteuerungssignal und das Funkensignal empfängt, einschließt und dass das UND-Gatter (106; 348, 364, 380, 396) einen Zündstrom im Ansprechen auf einen Empfang sowohl des Zeitsteuerungssignals als auch des Funkensignals erzeugt.

2. Brennkraftmaschinen-Aufbau nach Anspruch 1, wobei der Funke erzeugt wird, wenn das UND-Gatter (106; 348, 364, 380, 396) eine Erzeugung des Zündstroms stoppt.
